(19) 

(11) **EP 4 803 563 A1**

(12) **EUROPEAN PATENT APPLICATION**
published in accordance with Art. 153(4) EPC

(43) Date of publication:
**09.09.2026 Bulletin 2026/37**

(21) Application number: **24885319.4**

(22) Date of filing: **24.09.2024**

(51) International Patent Classification (IPC):
***C08J 5/18*** *(2006.01)* ***B65D 65/40*** *(2006.01)*
***C08L 5/00*** *(2006.01)* ***C08L 5/04*** *(2006.01)*
***C08L 101/06*** *(2006.01)*

(52) Cooperative Patent Classification (CPC):
**B65D 65/40; C08J 5/18; C08L 5/00; C08L 5/04; C08L 101/06**

(86) International application number:
**PCT/JP2024/034011**

(87) International publication number:
**WO 2025/094542 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 JP 2023185652**

(71) Applicant: **Kuraray Co., Ltd.**
**Kurashiki-shi, Okayama 710-0801 (JP)**

(72) Inventors:
- **SATO, Tomohiko**
  **Kurashiki-shi, Okayama 710-0801 (JP)**
- **HODAMA, Aoi**
  **Kurashiki-shi, Okayama 710-0801 (JP)**
- **SAWATANI, Hirotaka**
  **Kurashiki-shi, Okayama 710-0801 (JP)**
- **BABA, Masahiro**
  **Kurashiki-shi, Okayama 710-0801 (JP)**
- **MASAKI, Kento**
  **Kurashiki-shi, Okayama 710-0801 (JP)**

(74) Representative: **Müller-Boré & Partner Patentanwälte PartG mbB**
**Friedenheimer Brücke 21**
**80639 München (DE)**

# (54) WATER-SOLUBLE FILM

(57) The present invention relates to a water-soluble film comprising a polysaccharide and a plasticizer, wherein the content of the plasticizer is 45 to 85 mass% based on the mass of the water-soluble film.

EP 4 803 563 A1

## Description

### TECHNICAL FIELD

The present invention relates to a water-soluble film comprising a polysaccharide, a pouch comprising the water-soluble film, a laminate comprising the water-soluble film and a support, and a coating agent for forming the water-soluble film.

### BACKGROUND ART

Conventionally, water-soluble films have been widely used for applications such as pouches containing detergents, perfumes, chemicals, and the like, and their demand has been expanded due to their simplicity. As a water-soluble film, for example, water-soluble films containing a polysaccharide are known (for example, Patent Document 1).

### PRIOR ART DOCUMENT

### PATENT DOCUMENT

Patent Document 1: JP-A-S60-58044

### SUMMARY OF THE INVENTION

### PROBLEMS TO BE SOLVED BY THE INVENTION

However, a water-soluble film as disclosed in Patent Document 1 does not have sufficient dynamic strength, and for example, when the water-soluble film is used in the form of a pouch, breakage or the like may occur during transportation.

Accordingly, an object of the present invention is to provide a water-soluble film excellent in dynamic strength, a pouch comprising the water-soluble film, a laminate comprising the water-soluble film and a support, and a coating agent for forming the water-soluble film.

### SOLUTIONS TO THE PROBLEMS

As a result of intensive detailed studies to solve the above problems, the present inventors have found that the above problems can be solved and have accomplished the present invention. That is, the present invention includes the following preferred aspects.

[1] A water-soluble film comprising a polysaccharide and a plasticizer, wherein a content of the plasticizer is 45 to 85 mass% based on a mass of the water-soluble film.
[2] The water-soluble film according to [1], wherein the plasticizer is at least one selected from the group consisting of a polyhydric alcohol, a hydroxy acid, a monosaccharide, and a disaccharide.
[3] The water-soluble film according to [1] or [2], wherein the plasticizer is at least one selected from the group consisting of glycerin, diglycerin, sorbitol, alkylene glycol, polyalkylene glycol, trimethylolpropane, erythritol, 2-methyl-1,3-propanediol, lactic acid, glucose, fructose, maltose, and trehalose.
[4] The water-soluble film according to any of [1] to [3], wherein the plasticizer is at least one selected from the group consisting of glycerin, ethylene glycol, sorbitol, and fructose.
[5] The water-soluble film according to any of [1] to [4], wherein the polysaccharide is at least one selected from the group consisting of carrageenan, alginic acid, guar gum, xanthan gum, pectin, hydroxyalkylcellulose, alkylcellulose, tamarind seed gum, agar, pullulan, locust bean gum, tara gum, and derivatives thereof.
[6] The water-soluble film according to any of [1] to [5], wherein the polysaccharide is at least one selected from the group consisting of carrageenan, alginic acid, guar gum, xanthan gum, tamarind seed gum, locust bean gum, tara gum, and derivatives thereof.
[7] The water-soluble film according to any of [1] to [6], wherein the content of the polysaccharide is 5 to 55 mass% based on the mass of the water-soluble film.
[8] The water-soluble film according to any of [1] to [7], wherein the water-soluble film comprises two or more kinds of the polysaccharide.
[9] The water-soluble film according to any of [1] to [8], wherein the water-soluble film has a toughness of 700 or more.

[10] The water-soluble film according to any of [1] to [9], wherein the water-soluble film dissolves in water at 10°C within 1000 seconds.

[11] The water-soluble film according to any of [1] to [10], wherein the water-soluble film is a coating film formed from a coating agent comprising a polysaccharide and a plasticizer.

[12] A laminate comprising the water-soluble film according to any of [1] to [10] and a support, wherein the support is paper or a film.

[13] A pouch comprising the water-soluble film according to any of [1] to [10].

[14] The pouch according to [13], wherein the pouch contains therein at least one selected from the group consisting of a cleaning agent, a softener, and a perfume.

[15] A coating agent comprising a polysaccharide and a plasticizer, wherein the content of the plasticizer is 45 to 85 mass% based on the mass of the solid component of the coating agent.

EFFECTS OF THE INVENTION

According to the present invention, it is possible to provide a water-soluble film excellent in dynamic strength, a laminate comprising the water-soluble film and a support, and a coating agent for forming the water-soluble film.

DETAILED DESCRIPTION

Hereinafter, embodiments of the present invention will be described in detail. It is noted that the following is a description that exemplifies embodiments of the present invention, and the present invention is not intended to be limited to the following embodiments. The plurality of upper limit values and lower limit values described in the present description can be arbitrarily combined to form a suitable numerical range.

[Water-soluble film]

The water-soluble film of the present invention comprises a polysaccharide and a plasticizer, wherein the content of the plasticizer is 45 to 85 mass% based on the mass of the water-soluble film. In the present description, the dynamic strength means dynamic strength including "toughness", which is the product of the maximum stress (MPa) and the breaking elongation (%).

The present inventors conducted studies on the water solubility and the strength of a film, and have found that when, in a film containing a polysaccharide and a plasticizer, the content of the plasticizer is adjusted to 45 to 85 mass%, surprisingly, the dynamic strength can be improved while water solubility is maintained. The reason why the above effect can be obtained is not clear, but it is presumed that the polysaccharide and a specific amount of plasticizer form a higher order network, and both the maximum stress and the breaking elongation can be achieved at a high level.

<Polysaccharide>

The polysaccharide refers to a carbonized hydrate composed of 10 or more monosaccharides bonded together. Examples of the polysaccharide include starch, chitin, chitosan, cellulose, hemicellulose, dextrin, gum arabic, carrageenan, alginic acid, guar gum, xanthan gum, pectin, hydroxyalkylcellulose, alkylcellulose, carboxyalkylcellulose, tamarind seed gum, agar, pullulan, locust bean gum, tara gum, karaya gum, succinoglycan, and derivatives thereof. These polysaccharides may be used singly or two or more thereof may be used in combination. Among them, from the viewpoint of further enhancing the dynamic strength of the water-soluble film while securing the water solubility, the polysaccharide is preferably at least one selected from the group consisting of carrageenan, alginic acid, guar gum, xanthan gum, pectin, hydroxyalkylcellulose, alkylcellulose, tamarind seed gum, agar, pullulan, locust bean gum, tara gum, and derivatives thereof, more preferably at least one selected from the group consisting of carrageenan, alginic acid, guar gum, xanthan gum, tamarind seed gum, locust bean gum, tara gum, and derivatives thereof, still more preferably at least one selected from the group consisting of tamarind seed gum, carrageenan, and alginic acid, and particularly preferably includes tamarind seed gum.

In one embodiment of the present invention, from the viewpoint of achieving both excellent dynamic strength and excellent low temperature solubility, the polysaccharide is preferably at least one selected from the group consisting of guar gum, xanthan gum, tamarind seed gum, locust bean gum, tara gum, and derivatives thereof, and more preferably includes tamarind seed gum.

In one embodiment of the present invention, the number average molecular weight (sometimes referred to as Mn) of the polysaccharide is preferably 5 k to 50,000 kDa, more preferably 7 k to 10,000 kDa, and still more preferably 10 k to 5,000 kDa, and may be, for example, 5 k to 3,000 kDa, 10 k to 1000 kDa, or 15 to 700 kDa. The weight average molecular weight (sometimes referred to as Mw) of the polysaccharide is preferably 5 k to 150,000 kDa, more preferably 10 k to

50,000 kDa, and still more preferably 20 k to 30,000 kDa, and may be, for example, 30 k to 10,000 kDa, 50 k to 7,000 kDa, or 70 k to 5,000 kDa. When the Mn and/or the Mw of the polysaccharide is within the above range, the water solubility, the dynamic strength, and the low-temperature solubility of the water-soluble film can be enhanced. When the polysaccharide is composed of two or more polysaccharides, the Mn of the polysaccharide is a weighted average of the Mn of the two or more polysaccharides. The same applies to Mw.

Tamarind seed gum is a polysaccharide obtained from seeds of Tamarind (Tamarindus indica), and has a structure in which glucose is a main chain and xylose and galactose are bonded in a side chain. As the tamarind seed gum, commercially available products, such as "GLYLOID (registered trademark)", "Glyate (registered trademark)" (manufactured by MP Gokyo Food & Chemical Co., Ltd.), and "TG120" (manufactured by Mitsubishi Chemical Corporation), may be used. The Mn of the tamarind seed gum is preferably 10 k to 3,000 kDa, more preferably 30 k to 1,000 kDa, and still more preferably 50 k to 500 kDa, and may be, for example, 100 k to 500 kDa. The Mw of the tamarind seed gum is preferably 10 k to 50,000 kDa, more preferably 30 k to 10,000 kDa, and still more preferably 50 k to 5,000 kDa, and may be, for example, 500 k to 4,500 kDa or 1,000 k to 4,000 kDa.

Carrageenan is a polysaccharide obtained from red algae, and this has repeating units of D-galactose or 3,6-anhydro-D-galactose and has a sulfate group. Carrageenan is classified into κ (kappa) carrageenan, ι (iota) carrageenan, and λ (lambda) carrageenan. These may be used singly or two or more thereof may be used in combination. As the carrageenan, commercially available products, such as "GENUGEL carrageenan type JPE-126" (manufactured by Sansho Co., Ltd.), "GENUTINE VCS-J" (manufactured by Sansho Co., Ltd.), "MW210", "MV320", and "MW-952" (manufactured by Mitsubishi Chemical Corporation), may be used. The Mn of carrageenan is preferably 5 k to 5,000 kDa, more preferably 10 k to 3,000 kDa, and still more preferably 20 k to 1,000 kDa, and may be, for example, 25 k to 500 kDa or 30 k to 200 kDa. The Mw of the carrageenan is preferably 5 k to 15,000 kDa, more preferably 10 k to 10,000 kDa, and still more preferably 20 k to 5,000 kDa, and may be, for example, 50 k to 2,000 kDa, or 100 k to 1,000 kDa.

Xanthan gum is a polysaccharide produced by fermenting starch by bacterium Xanthomonas campestris, and has glucose as a main chain and a side chain containing one glucuronic acid between two mannoses. As the xanthan gum, commercially available products, such as "KIMICA XANTHAN PH-R3EC" (manufactured by KIMICA Corporation), "ECHO GUM (registered trademark)" (manufactured by MP Gokyo Food & Chemical Co., Ltd.), "SOAXAN" and "XG800" (manufactured by Mitsubishi Chemical Corporation), may be used. The Mn of xanthan gum is preferably 5 k to 50,000 kDa, more preferably 7 k to 10,000 kDa, and still more preferably 10 k to 5,000 kDa, and may be, for example, 10 k to 1,000 kDa or 15 k to 100 kDa. The Mw of xanthan gum is preferably 5 k to 150,000 kDa, more preferably 7 k to 50,000 kDa, and still more preferably 10 k to 30,000 kDa, and may be, for example, 10 k to 5,000 kDa, 30 k to 1,000 kDa, or 50 k to 500 kDa.

Guar gum is a polysaccharide obtained from the endosperm of guar bean (Cyamopsis tetragonoloba), and has a structure in which mannose is a main chain and galactose is bonded to a side chain. As the guar gum, commercially available products, such as "SUPERGEL CSA200/50" (manufactured by Sansho Co., Ltd.), "GUARPAK (registered trademark)" (manufactured by MP Gokyo Food & Chemical Co., Ltd.), and "RG100" (manufactured by Mitsubishi Chemical Corporation), may be used. The Mn of the guar gum is preferably 5 k to 20,000 kDa, more preferably 5 k to 10,000 kDa, and still more preferably 7 k to 5,000 kDa, and may be, for example, 10 k to 1,000 kDa, or 15 k to 100 kDa. The Mw of guar gum is preferably 5 k to 100,000 kDa, more preferably 5 k to 50,000 kDa, and still more preferably 7 k to 20,000 kDa, and may be, for example, 10 k to 5,000 kDa, 30 k to 1,000 kDa, or 50 k to 500 kDa.

Locust bean gum is a polysaccharide obtained from seeds of locust bean (Celatonia siliqua), and has a structure in which mannose is a main chain and galactose is bonded to a side chain. As the locust bean gum, commercially available products, such as "GENU (registered trademark) GUM type RL-200Z" (manufactured by Sansho Co., Ltd.), "SOALOCUST A120", "MC1000", and "SOALOCUST A200" (manufactured by Mitsubishi Chemical Corporation), may be used. The Mn of the locust bean gum is preferably 5 k to 50,000 kDa, more preferably 7 k to 10,000 kDa, and still more preferably 10 k to 5,000 kDa, and may be, for example, 15 to 1,000 kDa or 20 to 300 kDa. The Mw of the locust bean gum is preferably 5 k to 150,000 kDa, more preferably 10 k to 30,000 kDa, and still more preferably 15 k to 15,000 kDa, and may be, for example, 20 k to 5,000 kDa, 30 k to 1,000 kDa, or 50 k to 500 kDa.

Tara gum is a polysaccharide obtained from seeds of tara (Caesalpinia spinosa), and has a structure in which mannose is a main chain and galactose is bonded to a side chain. As the tara gum, commercially available products, such as "MT120" and "MT1000" (manufactured by Mitsubishi Chemical Corporation), may be used. The Mn of the tara gum is preferably 5 k to 10,000 kDa, more preferably 5 k to 5,000 kDa, and still more preferably 10 k to 1,000 kDa, and the Mw of the tara gum is preferably 5 k to 30,000 kDa, more preferably 10 k to 15,000 kDa, and still more preferably 15 k to 10,000 kDa.

The Mn of alginic acid is preferably 5 k to 50,000 kDa, more preferably 7 k to 10,000 kDa, and still more preferably 10 k to 5,000 kDa, and may be, for example, 15 to 1,000 kDa or 20 to 300 kDa. The Mw of alginic acid is preferably 5 k to 150,000 kDa, more preferably 10 k to 30,000 kDa, and still more preferably 15 k to 15,000 kDa, and may be, for example, 20 k to 5,000 kDa, 30 k to 1,000 kDa, or 50 k to 500 kDa.

When the Mn and/or the Mw of each polysaccharide is within the above range, the water solubility, the dynamic strength, and the low-temperature solubility of the water-soluble film can be enhanced. As the polysaccharide, the same

kind of polysaccharides having different Mn and/or Mw may also be contained. In the present description, the Mn and the Mw of the polysaccharide can be determined by gel filtration HPLC, and can be determined, for example, by the method described in Examples described later.

Examples of the hydroxyalkylcellulose include hydroxyalkylcellulose having a hydroxyalkyl group having 2 to 10 carbon atoms, preferably hydroxyalkylcellulose having a hydroxyalkyl group having 2 to 6 carbon atoms, such as hydroxyethylcellulose, hydroxypropylcellulose, hydroxypropylmethylcellulose, and hydroxyethylmethylcellulose. Examples of the alkylcellulose include an alkylcellulose having an alkyl group of 2 to 10 carbon atoms and an alkylcellulose having an alkyl group of 2 to 6 carbon atoms, such as methylcellulose, ethylcellulose, propylcellulose, and butylcellulose. The hydroxyalkylcellulose refers to cellulose in which one or more hydroxyl groups are modified with a hydroxyalkyl group, and the alkylcellulose refers to cellulose in which one or more hydroxyl groups are modified with an alkyl group. The number of the carbon atoms of the hydroxyalkyl group and the number of the carbon atoms of the alkyl group refer to the number of the carbon atoms of one hydroxyalkyl group and the number of the carbon atoms of one alkyl group, respectively.

Examples of derivatives of these polysaccharides include sodium salts, potassium salts, calcium salts, enzyme-treated products, acid hydrolysates, etherified products, carboxylalkylated products, aminated products and their hydrochloride salts, phosphorylated products, esterified products, crosslinked products, and oxides. As the polysaccharide A, a single polysaccharide may be used alone, or two or more polysaccharides may be used in combination.

In one embodiment of the present invention, the content of the polysaccharide is preferably 5 to 55 mass%, more preferably 10 to 53 mass%, still more preferably 15 to 52 mass%, 15 to 51 mass%, or 17 to 50 mass%, further preferably 20 mass% or more and less than 50 mass%, or 25 to 49 mass%, particularly preferably 28 to 48 mass%, or 29 to 47 mass%, particularly more preferably 30 to 45 mass%, or 30 to 43 mass%, and particularly still more preferably 31 to 40 mass%, or 32 to 39 mass% based on the mass of the water-soluble film. When the content of the polysaccharide is within the above range, the water solubility, the dynamic strength, and the low-temperature solubility of the water-soluble film can be enhanced.

In one embodiment of the present invention, the water-soluble film may contain two or more kinds of polysaccharides. When two or more kinds of polysaccharides are contained, two or more polysaccharides can form a higher order network by hydrogen bonding or the like, so that the dynamic strength can be improved. The water-soluble film may preferably contain two or more or three or more polysaccharides, and may preferably contain five or less polysaccharides, and more preferably four or less polysaccharides.

In one embodiment of the present invention, when the water-soluble film contains two or more kinds of polysaccharides, the water-soluble film preferably contains a polysaccharide A and a polysaccharide B different from the polysaccharide A from the viewpoint of enhancing the dynamic strength of the water-soluble film while maintaining the water solubility. The polysaccharide A is preferably at least one selected from the group consisting of carrageenan, alginic acid, guar gum, xanthan gum, pectin, hydroxyalkylcellulose, alkylcellulose, tamarind seed gum, agar, pullulan, locust bean gum, tara gum, and derivatives thereof, more preferably at least one selected from the group consisting of carrageenan, alginic acid, tamarind seed gum, locust bean gum, tara gum, and derivatives thereof, still more preferably at least one selected from the group consisting of carrageenan, alginic acid, tamarind seed gum, and derivatives thereof, and particularly preferably tamarind seed gum. The polysaccharide B is a polysaccharide different from the polysaccharide A, and is preferably at least one selected from the group consisting of carrageenan, alginic acid, guar gum, xanthan gum, hydroxyalkylcellulose, alkylcellulose, tamarind seed gum, locust bean gum, tara gum, and derivatives thereof, more preferably at least one selected from the group consisting of carrageenan, alginic acid, guar gum, xanthan gum, locust bean gum, tara gum, and derivatives thereof, and still more preferably at least one selected from the group consisting of carrageenan, guar gum, xanthan gum, locust bean gum, and derivatives thereof.

In one embodiment of the present invention, from the viewpoint of improving the dynamic strength of the water-soluble film, it is preferable that the polysaccharide A is tamarind seed gum and a derivative thereof and the polysaccharide B is at least one selected from the group consisting of carrageenan, alginic acid, guar gum, xanthan gum, hydroxyalkylcellulose, alkylcellulose, tamarind seed gum, locust bean gum, tara gum, and derivatives thereof, and it is more preferable that the polysaccharide A is tamarind seed gum and a derivative thereof and the polysaccharide B is at least one selected from the group consisting of carrageenan, alginic acid, guar gum, xanthan gum, locust bean gum, tara gum, and derivatives thereof. From the viewpoint of further improving the dynamic strength of the water-soluble film, it is more preferable that the polysaccharide A is tamarind seed gum and a derivative thereof and the polysaccharide B is at least one selected from the group consisting of carrageenan, guar gum, xanthan gum, locust bean gum, and derivatives thereof. From the viewpoint of excellent low-temperature solubility and excellent dynamic strength of the water-soluble film, it is particularly preferable that the polysaccharide A is tamarind seed gum and a derivative thereof and the polysaccharide B is at least one selected from guar gum, xanthan gum, locust bean gum, and derivatives thereof.

In one embodiment of the present invention, as the combination of the polysaccharide A/the polysaccharide B, tamarind seed gum/carrageenan; tamarind seed gum/xanthan gum; tamarind seed gum/guar gum; tamarind seed gum/locust bean gum; tamarind seed gum/starch; and the like are preferable from the viewpoint of further improving

the dynamic strength of the water-soluble film while maintaining the water solubility, and tamarind seed gum/xanthan gum; tamarind seed gum/guar gum; tamarind seed gum/locust bean gum; and the like are more preferable from the viewpoint of achieving both excellent dynamic strength and excellent low-temperature solubility. In addition, as the combination of the polysaccharide A/a polysaccharide B-1/a polysaccharide B-2, tamarind seed gum/xanthan gum/guar gum; tamarind seed gum/xanthan gum/locust bean gum; and the like are preferable from the viewpoint of achieving both excellent dynamic strength and excellent low-temperature solubility of the water-soluble film.

In one embodiment of the present invention, the Mn of the polysaccharide A is preferably 5 k to 50,000 kDa, more preferably 7 k to 10,000 kDa, and still more preferably 10 k to 5,000 kDa, and may be, for example, 5 k to 3,000 kDa, 10 k to 1000 kDa, or 15 to 700 kDa. The Mw of the polysaccharide A is preferably 5 k to 150,000 kDa, more preferably 10 k to 50,000 kDa, still more preferably 20 k to 30,000 kDa, and may be, for example, 30 k to 10,000 kDa, 50 k to 7,000 kDa, or 70 k to 5,000 kDa. The Mn of the polysaccharide B is preferably 5 k to 50,000 kDa, more preferably 7 k to 10,000 kDa, and still more preferably 10 k to 5,000 kDa, and may be, for example, 5 k to 1000 kDa, 10 k to 500 kDa, or 15 to 200 kDa. The Mw of the polysaccharide B is preferably 5 k to 150,000 kDa, more preferably 10 k to 50,000 kDa, and still more preferably 20 k to 30,000 kDa, and may be, for example, 10 k to 10,000 kDa, 30 k to 5,000 kDa, or 50 k to 1,000 kDa. When the Mn and/or the Mw of each polysaccharide is within the above range, the water solubility, the dynamic strength, and the low-temperature solubility of the water-soluble film can be enhanced. When each polysaccharide is composed of two or more polysaccharides, the Mn of each polysaccharide is a weighted average of Mn of two or more polysaccharides, and the same applies to Mw.

In one embodiment of the present invention, the content of the polysaccharide A is preferably 2 to 50 mass%, more preferably 5 to 48 mass%, still more preferably 10 to 48 mass%, further preferably 15 to 47 mass%, 16 to 46 mass%, or 17 to 45 mass%, still further preferably 20 to 44 mass%, particularly preferably 25 to 43 mass% or 30 to 43 mass%, and particularly more preferably 30 to 42 mass%, 32 to 42 mass%, or 35 to 41 mass% based on the mass of the water-soluble film. When the content of the polysaccharide A is within the above range, the water solubility, the dynamic strength, and the low-temperature solubility of the water-soluble film can be enhanced. The content of the polysaccharide B is preferably 0.5 to 20 mass%, more preferably 1 to 15 mass%, and still more preferably 1.5 to 10 mass% or 3 to 9.5 mass% based on the mass of the water-soluble film. When the content of the polysaccharide B is within the above range, the water solubility, the dynamic strength, and the low-temperature solubility of the water-soluble film can be enhanced.

In one embodiment of the present invention, the content ratio (mass ratio) of the polysaccharide A to the polysaccharide B is preferably 99.9 : 0.1 to 50 : 50, more preferably 99.5 : 0.5 to 60 : 40, still more preferably 99 : 1 to 70 : 30, further preferably 98 : 2 to 75 : 25, and particularly preferably 97 : 3 to 80 : 20, 97 : 3 to 85 : 15, or 96 : 4 to 87 : 13. When the content ratio of the polysaccharide A to the polysaccharide B is within the above range, the water solubility, the dynamic strength, and the low-temperature solubility of the water-soluble film can be enhanced.

<Plasticizer>

The water-soluble film of the present invention contains a plasticizer in an amount of 45 to 85 mass% based on the mass of the water-soluble film. When the plasticizer is contained in an amount of 45 to 85 mass%, excellent dynamic strength can be exhibited. In particular, because the breaking elongation can be increased while ensuring a high maximum stress, the toughness can be improved. Further, processability can also be improved; for example, film formation is facilitated.

In the water-soluble film of the present invention, the content of the plasticizer is preferably 47 to 85 mass%, more preferably 48 to 85 mass%, 49 to 85 mass%, or 50 to 83 mass%, still more preferably more than 50 mass% and 80 mass% or less, or 51 to 75 mass%, further preferably 52 to 72 mass%, or 53 to 71 mass%, particularly preferably 55 to 70 mass% or 57 to 70 mass%, and particularly more preferably 60 to 69 mass%, or 61 to 68 mass%. When the content of the plasticizer is within the above range, the dynamic strength and the processability of the water-soluble film can be further enhanced while the water solubility is maintained.

In one embodiment of the present invention, the content ratio (mass ratio) of the polysaccharide to the plasticizer is preferably 52 : 48 to 15 : 85, 51 : 49 to 15 : 85, or 50 : 50 to 17 : 83, more preferably 50 : 50 to 20 : 80 or 49 : 51 to 25 : 75, still more preferably 48 : 52 to 28 : 72 or 47 : 53 to 29 : 71, further preferably 45 : 55 to 30 : 70 or 43 : 57 to 30 : 70, and particularly preferably 40 : 60 to 31 : 69 or 39 : 61 to 32 : 68. When the content ratio of the polysaccharide to the plasticizer is within the above range, the dynamic strength and the processability can be further enhanced while the water solubility of the water-soluble film is maintained.

The plasticizer is preferably at least one selected from the group consisting of a polyhydric alcohol, a hydroxy acid, a monosaccharide, and a disaccharide. The plasticizer may aggregate the polysaccharide A by a dehydration action. In addition, since the plasticizer can form a higher order network by hydrogen bonding with the polysaccharide, the dynamic strength of the water-soluble film can be further enhanced in addition to the improvement in processability. As to the plasticizer, a single plasticizer may be used alone, or two or more plasticizers may be used in combination.

Examples of the polyhydric alcohol include glycerin, diglycerin, sorbitol, alkylene glycols (for example, alkylene

glycols having 2 to 10 carbon atoms such as ethylene glycol, propylene glycol, and neopentyl glycol), polyalkylene glycols (for example, diethylene glycol, triethylene glycol, tetraethylene glycol, polyethylene glycol having a molecular weight of up to 400, polypropylene glycol having a molecular weight of up to 400), trimethylolpropane, erythritol, xylitol, 2-methyl-1,3-propanediol, maltitol, mannitol, and pentaerythritol.

Examples of the hydroxy acid include lactic acid, glycolic acid, malic acid, and tartaric acid.

Examples of the monosaccharide include glucose, mannose, galactose, fructose, and xylose.

Examples of the disaccharide include maltose, trehalose, sucrose, and lactose.

Among them, from the viewpoint of further enhancing the dynamic strength of the water-soluble film while maintaining the water solubility, the plasticizer is preferably at least one selected from the group consisting of glycerin, diglycerin, sorbitol, alkylene glycols, trimethylolpropane, erythritol, 2-methyl-1,3-propanediol, lactic acid, glucose, fructose, maltose, and trehalose, and more preferably at least one selected from the group consisting of glycerin, ethylene glycol, sorbitol, and fructose.

<Additives>

In the water-soluble film of the present invention, the water-soluble film may contain an additive other than the polysaccharide and the plasticizer as long as the effect of the present invention is not hindered. Examples of the additive include a dispersant, moisture, an antioxidant, an ultraviolet absorber, a lubricant, a colorant, a preservative, a filler, and a crosslinking agent. As to the additive, a single additive may be used alone, or two or more additives may be used in combination.

The filler refers to a component that is incompatible with the polysaccharide and the plasticizer. When a filler is contained in the water-soluble film, the stress of the resulting water-soluble film can be particularly improved because the filler can form a higher order network by hydrogen bonding with the polysaccharide and the plasticizer. In addition, particularly when a water-soluble film is prepared by coating, the solid component concentration is increased by adding a filler to a coating agent, and the thickness of the coating film can be increased.

Examples of the filler include inorganic pigments such as kaolin, clay, engineered kaolin, delaminated clay, heavy calcium carbonate, light calcium carbonate, mica (swellable mica, synthetic mica, muscovite, sericite, phlogopite, biotite, fluorphlogopite (artificial mica), red mica, soda mica, roscoelite, illite, tin mica, paragonite, and brittle mica), talc, titanium dioxide, barium sulfate, calcium sulfate, zinc oxide, silicic acid, silicates, bentonite (montmorillonite, beidellite, saponite, stevensite, hectorite, and the like), colloidal silica, and satin white, as well as organic pigments such as a solid type organic pigment, a hollow type organic pigment, and a core-shell type organic pigment. As to the filler, a single filler may be used alone, or two or more fillers may be used in combination.

When the water-soluble film contains a filler, the total content of the filler is preferably 0.1 to 50 mass%, more preferably 0.5 to 35 mass%, still more preferably 1 to 30 mass%, further preferably 1.5 to 20 mass%, more preferably 2 to 18 mass%, still more preferably 2 to 15 mass%, further preferably 2 to 10 mass%, and particularly preferably 2 to 6 mass% based on the mass of the water-soluble film from the viewpoint of improving the stress of the resulting water-soluble film. From the viewpoint of increasing the thickness of the coating film, the content is preferably 1 to 90 mass%, more preferably 5 to 80 mass%, still more preferably 10 to 75 mass%, further preferably 20 to 70 mass%, still further preferably 30 to 65 mass%, more preferably 40 to 60 mass%, still more preferably 42 to 58 mass%, and particularly preferably 45 to 55 mass%.

A dispersant may be additionally added to the coating agent for preparing the water-soluble film. By adding the dispersant, the dispersibility of the filler can be improved.

A cationic polymer is preferable as the dispersant, and examples thereof include a polyalkylene polyamine, a polyamide compound, a polyamidoamine-epihalohydrin or formaldehyde condensation reaction product, a polyamine-epihalohydrin or formaldehyde condensation reaction product, a polyamide polyurea-epihalohydrin or formaldehyde condensation reaction product, a polyamine polyurea-epihalohydrin or formaldehyde condensation reaction product, a polyamide amine polyurea-epihalohydrin or formaldehyde condensation reaction product, a polyamide polyurea compound, a polyamine polyurea compound, a polyamide amine polyurea compound, and a polyamide amine compound, polyethyleneimine, polyvinylpyridine, an amino-modified acrylamide-based compound, polyvinylamine, polydiallyldimethylammonium chloride, and a modified polyvinyl alcohol. As to the dispersant, a single dispersant may be used alone, or two or more dispersants may be used in combination.

When the water-soluble film contains a dispersant, the content of the dispersant is preferably 0.01 to 20 mass%, more preferably 0.1 to 10 mass%, and still more preferably 1 to 5 mass% based on the mass of the water-soluble film.

Examples of the crosslinking agent include tannic acid and salts thereof, tannin other than tannic acid, catechin, anthocyanin, gallic acid and salts thereof, phenols, and hydroquinone.

The content of the additive is not particularly limited as long as the effect of the present invention is not hindered, but is approximately, for example, 0 to 10 mass%, preferably 0.001 to 10 mass%, more preferably 0.01 to 5 mass%, and still more preferably 0.1 to 1 mass% based on the mass of the water-soluble film.

In one embodiment of the present invention, in the water-soluble film of the present invention, the content of the polyvinyl alcohol-based resin in the water-soluble film is preferably less than 30 mass%, more preferably 20 mass% or less, still more preferably 10 mass% or less, further preferably 5 mass% or less, particularly preferably 1 mass% or less, and particularly more preferably 0.1 mass%, and may be 0 mass%. That is, the content of the polyvinyl alcohol-based resin is preferably 0 to less than 30 mass%, more preferably 0 to 20 mass%, still more preferably 0 to 10 mass%, further preferably 0 to 5 mass%, particularly preferably 0 to 1 mass%, and particularly more preferably 0 to 0.1 mass%. As the polyvinyl alcohol-based resin to be used in the present invention, vinyl acetate composed of petroleum-derived carbon, vinyl acetate composed of biomass-derived carbon, or vinyl acetate composed of a mixture thereof can be used as a raw material. In addition, a polyvinyl alcohol-based resin having an apparent biomass ratio changed by the mass balance method may be used.

In one embodiment of the present invention, in the water-soluble film of the present invention, the total content of the polysaccharide and the plasticizer contained in the water-soluble film is preferably 30 mass% or more, more preferably 50 mass% or more, still more preferably 70 mass% or more, further preferably 80 mass% or more, particularly preferably 90 mass% or more, particularly more preferably 95 mass% or more, and particularly still more preferably 98 mass% or more, and may be 100 mass% based on the mass of the water-soluble film. That is, the total content is preferably 30 to 100 mass%, more preferably 50 to 100 mass%, still more preferably 70 to 100 mass%, further preferably 80 to 100 mass%, particularly preferably 90 to 100 mass%, particularly more preferably 95 to 100 mass%, and particularly still more preferably 98 to 100 mass%. When the total content of the polysaccharide and the plasticizer contained in the water-soluble film is within the above range, the water solubility, the dynamic strength, and the low-temperature solubility of the water-soluble film can be further enhanced.

<Water-soluble film>

Since the water-soluble film of the present invention contains the plasticizer in an amount of 45 to 85 mass% in addition to the polysaccharide, the water-soluble film is excellent in dynamic strength. In the present description, "water-soluble" means soluble in water, and preferably means that the solubility in hot water at 90°C is 90 mass% or more. That is, when a water-soluble film is added to warm water at 90°C, the film is dissolved by stirring for 5 minutes, and then the amount of a solid component that does not pass through a filter (21 μm) is 10 mass% or less, the water-soluble film can be evaluated as being water-soluble. The mass of the water-soluble film to be dissolved in warm water at 90°C is 0.1 parts by mass with respect to 100 parts by mass of the warm water at 90°C. The solubility of the water-soluble film in warm water at 90 °C is 90 mass% or more, preferably 95 mass% or more, and more preferably 98 mass% or more. When the solubility is the lower limit or more, for example, when the water-soluble film is dissolved in water, residues are less prone to remain. The upper limit of the solubility of the water-soluble film is 100 mass%. That is, the solubility of the water-soluble film is 90 to 100 mass%, preferably 95 to 100 mass%, and more preferably 98 to 100 mass%. The solubility of the water-soluble film can be adjusted to the above lower limit or more by appropriately adjusting, for example, the type and/or amount or the like of the components contained in the water-soluble film.

In one embodiment of the present invention, the water-soluble film can achieve both high low-temperature solubility and high dynamic strength. The low-temperature solubility refers to the solubility of the water-soluble film at a low temperature (for example, 10°C). In one embodiment of the present invention, the water-soluble film of the present invention can dissolve in water at 10°C preferably within 1000 seconds. That is, when a water-soluble film having a length of 30 mm × a width of 40 mm × a thickness of 50 μm is immersed in 500 mL of water at 10°C, the time taken for the water-soluble film to be completely dissolved is preferably 1000 seconds or less, more preferably 700 seconds or less, still more preferably 600 seconds or less, and further preferably 500 seconds or less, and may be, for example, 300 seconds or less or 180 seconds or less. When the complete dissolution time of the water-soluble film in water at 10°C is the above upper limit or less, the water-soluble film can rapidly dissolve even when the water-soluble film is dissolved in cold water and used. For example, in the case of a pouch including a water-soluble film, even when the pouch is dissolved in cold water and used, the contents are quickly released, which is preferable. In addition, residues are less prone to remain. The lower limit of the complete dissolution time is not particularly limited, and it is preferable that the time required for complete dissolution is as short as possible. The complete dissolution time of the water-soluble film in water at 10°C can be adjusted to the above upper limit or less by appropriately adjusting, for example, the type and/or amount of the components contained in the water-soluble film; and the production conditions of the water-soluble film (drying conditions, or the like). The complete dissolution time in water at 10°C can be determined, for example, by the method described in Examples described later.

Since the water-soluble film of the present invention can achieve both the maximum stress and the breaking elongation at a high level, the water-soluble film can have excellent toughness. In one embodiment of the present invention, the maximum stress of the water-soluble film is preferably 5 MPa or more, more preferably 10 MPa or more, still more preferably 15 MPa or more, further preferably 20 MPa or more, particularly preferably 25 MPa or more, and particularly more preferably 30 MPa or more, and may be, for example, 35 MPa, 40 MPa, 45 MPa, or 50 MPa or more.

When the maximum stress of the water-soluble film is the above lower limit or more, the dynamic strength of the water-soluble film can be improved. The upper limit of the maximum stress of the water-soluble film is usually 150 MPa or less, and preferably 140 MPa or less. That is, a preferable range is 5 to 150 MPa, 10 to 150 MPa, 15 to 150 MPa, 20 to 150 MPa, 25 to 150 MPa, 30 to 150 MPa, 35 to 150 MPa, 40 to 150 MPa, 45 to 150 MPa, or 50 to 140 MPa.

In one embodiment of the present invention, the breaking elongation of the water-soluble film is preferably 10% or more, more preferably 25% or more, still more preferably 35% or more, further preferably 40% or more, particularly preferably 50% or more, particularly more preferably 70% or more, particularly still more preferably 75% or more, and extremely preferably 80% or more or 85% or more, and may be, for example, 90% or more, 95% or more, or 100% or more. When the breaking elongation of the water-soluble film is the above lower limit or more, the dynamic strength of the water-soluble film can be improved. The upper limit of the breaking elongation of the water-soluble film is usually 300% or less, and preferably 200% or less. That is, a preferable range is 10 to 150%, 25 to 150%, 35 to 150%, 40 to 150%, 50 to 150%, 70 to 150%, 75 to 150%, 80 to 150%, 85 to 150%, 90 to 150%, 95 to 150%, or 100 to 140%. The maximum stress and the breaking elongation of the water-soluble film can be determined by a tensile test, and for example, can be determined by the method described in Examples described later.

In one embodiment of the present invention, the toughness of the water-soluble film is preferably 700 or more, more preferably 900 or more, still more preferably 1100 or more, further preferably 1200 or more, particularly preferably 1300 or more, particularly more preferably 1400 or more, particularly still more preferably 1500 or more, and extremely preferably 1600 or more, and may be, for example, 1700 or more, 1800 or more, 1900 or more, 2000 or more, or 2200 or more. When the toughness of the water-soluble film is the above lower limit or more, the dynamic strength of the water-soluble film can be improved. The upper limit of the toughness is usually 4000 or less, and preferably 3000 or less. That is, a preferable range is 700 to 4000, 900 to 4000, 1100 to 4000, 1200 to 4000, 1300 to 4000, 1400 to 4000, 1500 to 4000, 1600 to 4000, 1700 to 4000, 1800 to 4000, 1900 to 4000, 2000 to 4000, or 2200 to 3000. The toughness of the water-soluble film can be determined by the maximum stress × the breaking elongation in the tensile test.

The water-soluble film may be a monolayer film, or alternatively may be a multilayer film in which a plurality of the water-soluble film described above is laminated. From the viewpoint of water solubility, dynamic strength, low-temperature solubility, and production efficiency, the water-soluble film is preferably a monolayer film.

In one embodiment of the present invention, the film thickness of the water-soluble film is preferably 1 to 500 μm, more preferably 5 to 300 μm, still more preferably 10 to 150 μm, and further preferably 20 to 110 μm. When the film thickness of the water-soluble film is within the above range, the water solubility, the dynamic strength, and the low-temperature solubility of the water-soluble film can be good. The film thickness of the water-soluble film can be determined, for example, using a film thickness meter, and can be determined by the method described in Examples described later. When the water-soluble film is a multilayer film, the film thickness of the water-soluble film means the film thickness of a single water-soluble film.

In one embodiment of the present invention, the water-soluble film of the present invention does not allow the plasticizer to bleed out and is excellent in homogeneity. The surface of the water-soluble film may be flat, and from the viewpoint of preventing sticking of products, one surface or both surfaces of the water-soluble film may be subjected to uneven processing such as an embossed pattern or an uneven pattern. For such uneven processing, a method publicly-known in the art can be adopted.

<Method for producing water-soluble film>

The method for producing the water-soluble film of the present invention is not particularly limited, and the water-soluble film can be produced by a method publicly-known in the art.

For example, the water-soluble film can be produced by a method including:

(1) a step of obtaining a coating liquid (coating agent) by, for example, stirring a polysaccharide, a plasticizer, and a solvent, and optionally an additive at a prescribed temperature;
(2) a step of forming a coating film; and
(3) a step of drying the coating film to form a dry coating film.

The solid component concentration of the coating liquid is preferably 1 to 15 mass%, and more preferably 2 to 10 mass%. The solid component concentration indicates the total mass of the components other than the solvent (for example, the polysaccharide, the plasticizer, and additives) based on the mass of the coating liquid.

The temperature at which the polysaccharide, the plasticizer, the solvent, and optionally an additive are stirred is usually 15 to 100°C, and preferably 30 to 98°C. The stirring method is not particularly limited, and stirring may be conducted by a conventionally publicly-known method.

The solvent is not particularly limited, but water, ethanol, methanol, 1-propanol, 2-propanol, and the like are preferable because the polysaccharide is easily dissolved and subsequent drying is easily conducted.

The coating film can be formed, for example, by applying a coating liquid onto a base material. Examples of the base material include polyolefins such as polyethylene and polypropylene; polyesters such as polyethylene terephthalate; polyamides such as nylon 6 and nylon 66; fluororesin such as Teflon (registered trademark); and a metal plate.
Examples of the method for applying the coating liquid to the base material or the like include publicly-known methods such as a spin coating method, an extrusion method, a bar coating method, and an applicator method. As a coater, a blade coater, a bar coater, a roll coater, a gravure coater, a reverse gravure coater, a comma coater, an air knife coater, a reverse roll coater, a curtain coater, a spray coater, a size press coater, a gate roll coater, or the like can be used.
Subsequently, the solvent is removed by drying or the like to form a dry coating film. Examples of the drying method include a natural drying method, a forced-air drying method, a heat drying method, and a reduced-pressure drying method. As a dryer, a conventional dryer can be used, and examples thereof include a steam heater, a gas heater, an infrared heater, an electric heater, a hot air heater, a microwave, and a cylinder dryer.
The dry coating film is a water-soluble film.
Alternatively, a water-soluble film can also be produced by a melt extrusion film formation method, a blown film extrusion method, or the like in which a film-forming dope obtained using an extruder or the like is extruded through a T-die or the like to form a film.
A water-soluble film can be obtained by forming a water-soluble film on a base material and then removing the base material. Further, the water-soluble film may be used as it is without the base material being peeled off. When the base material is not peeled off, a laminate comprising the base material (support) and the water-soluble film can be obtained. In the case of peeling, it is preferable that a release agent is applied to an applied surface.

[Laminate]

The present invention also encompasses a laminate comprising a water-soluble film and a support, the water-soluble film comprising a polysaccharide and a plasticizer, the content of the plasticizer being 45 to 85 mass% based on the mass of the solid component (the component other than the solvent) of the coating agent. The support is preferably paper or a film. Since the laminate of the present invention in such an embodiment includes the water-soluble film including, in addition to the polysaccharide, the plasticizer in an amount of 45 to 85 mass% based on the mass of the solid component of the coating agent, the laminate is excellent in dynamic strength.
Examples of the support in the laminate comprising a water-soluble film and a support include paper or a film (hereinafter also referred to as "support film").
When the support is paper, examples of the paper include kraft paper, machine-glazed kraft paper, machine-glazed bleached kraft paper, bleached kraft paper, unbleached kraft paper, woodfree paper, wood containing paper, coated paper, machine-glazed paper, simili paper, glassine paper, graphane paper, parchment paper, synthetic paper, white paperboard, manila board, milk carton base paper, cup base paper, ivory paper, silver-white paper, thin paper, paperboard, rayon paper, wax paper, and liner paper.
The basis weight of the paper is preferably 20 to 400 g/m$^2$, and more preferably 25 to 150 g/m$^2$ from the viewpoint of being suitable for packaging applications. The basis weight of the paper is more preferably 30 to 100 g/m$^2$, and still more preferably 40 to 70 g/m$^2$ from the viewpoint of being suitable for soft packaging material applications described later. The basis weight of paper is measured in accordance with JIS P 8124:2011.
The paper can be generally produced by paper-making a paper material containing pulp, a filler, and various aids.
Examples of the pulp include chemical pulps such as hardwood bleached kraft pulp (LBKP), softwood bleached kraft pulp (NBKP), hardwood unbleached kraft pulp (LUKP), softwood unbleached pulp (NUKP), and sulfite pulp; mechanical pulps such as stone ground pulp and thermomechanical pulp; wood fibers such as deinked pulp and waste paper pulp; and non-wood fibers obtained from kenaf, bamboo, hemp, etc. These may be used singly, or two or more of them may be used in combination. Among those, from the viewpoint of being able to reduce the possibility of contamination of base paper with foreign substances and the possibility of discoloration over time when recycled after use, and being able to realize good printing due to high whiteness and increase the value of use (particularly when used as a packaging material), it is preferable to use chemical pulp and mechanical pulp of wood fibers, and it is more preferable to use chemical pulp.
Materials other than pulp may also be blended as a sub paper material as long as the effect of the present invention is not impaired. Examples of such materials include synthetic fibers such as rayon fibers and nylon fibers.
Examples of the filler include white carbon, talc, kaolin, clay, heavy calcium carbonate, light calcium carbonate, titanium oxide, zeolite, and synthetic resin fillers. These may be used singly, or two or more of them may be used in combination.
Examples of the various aids include aluminum sulfate, various anionic, cationic, nonionic or amphoteric yield improvers, water-filterability improvers, paper strengthening agents, and internal sizing agents, and these can be used singly or two or more thereof can be used in combination. Optionally, dyes, fluorescent brighteners, pH adjusters, defoaming agents, pitch control agents, slime control agents, and additives of two or more thereof can also be used.

The method for producing the paper is not particularly limited, and for example, the paper can be produced in accordance with the following procedure.

First, a paper material is prepared by mixing a pulp slurry, a filler, and various aids. The pulp slurry can be prepared by beating pulp in the presence of water. The pulp beating method and beating device are not particularly limited, and publicly-known beating methods and beating devices can be employed. The content of the pulp in the paper material is not particularly limited. For example, the content is 60 mass% or more and less than 100 mass% based on the total mass of the paper material.

Subsequently, a paper material may be subjected to papermaking in the acidic papermaking method, a neutral papermaking method, or the alkaline papermaking method using any publicly-known Fourdrinier former, on-top hybrid former, gap former machine, etc. A single sheet of wet paper obtained after dehydration is pressed, or two or more sheets of the wet paper obtained after dehydration are stacked, as necessary, and pressed, followed by drying, to yield paper. At this time, when two or more sheets of the wet paper are not stacked, a single-layer paper is obtained, and when two or more sheets of wet paper are stacked, a multi-layer paper is obtained. When two or more sheets of wet paper are stacked, an adhesive may be applied to a surface of the wet paper (a surface on which another wet paper is stacked).

The paper may have a surface treated with various chemicals. Examples of the chemicals that can be used include oxidized starch, hydroxyethyl etherized starch, enzyme-modified starch, polyacrylamide, polyvinyl alcohol, a surface sizing agent, a water-resistant agent, a water retainer, a thickener, and a lubricant. These may be used singly, or two or more of them may be used in combination. Furthermore, these various agents and a pigment may be used in combination. Examples of the pigment include inorganic pigments such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate salts, colloidal silica, and satin white, and organic pigments such as a solid type, a hollow type, and a core-shell type, and these pigments may be used singly or two or more thereof may be used in combination.

The method of surface treatment of paper is not particularly limited. For example, the surface of the paper can be treated using a publicly-known application device such as a rod metering size press, a pond-type size press, a gate roll coater, a spray coater, a blade coater, or a curtain coater.

When the support is a film, examples of the film include films (films of polyolefins such as polyethylene, polypropylene, and norbornene-based polymer; polyvinyl alcohol film; polyethylene terephthalate (PET) film; poly (meth)acrylic acid ester film; films of cellulose esters such as triacetyl cellulose, diacetyl cellulose and cellulose acetate propionate; polylactic acid film; ethylene-vinyl alcohol copolymer film, etc.), and a sheet.

The average thickness of the paper or film as a support is, for example, approximately 1 to 500 μm, or 10 to 300 μm.

In the laminate, the water-soluble film may have one layer or multiple layers. When the water-soluble film has multiple layers, they may be the same or different from each other. In addition, the laminate may include an optional layer. The laminate may have one or more layers selected from the group consisting of a barrier layer, a protective layer, and a heat seal layer as optional layers at arbitrary positions in the layer configuration. When the laminate has a protective layer and/or a heat seal layer, the layer is preferably disposed as an outermost layer of the laminate.

The barrier layer may be a gas barrier layer or a water vapor barrier layer, and such barrier layers are known in the art. Examples of the barrier layer include a resin layer and a metal foil, and more specific examples include a resin layer containing polyvinyl alcohol, an ethylene-vinyl alcohol copolymer and/or polyvinylidene chloride, a layer containing the polysaccharide and the plasticizer but not corresponding to the water-soluble film of the present invention, an aluminum foil, an aluminum-deposited film (an item with aluminum deposited on a base material such as polyethylene, polypropylene, nylon, polyethylene terephthalate, or an ethylene-vinyl alcohol copolymer), an alumina-deposited film (an item with alumina deposited on a base material such as polyethylene, polypropylene, nylon, polyethylene terephthalate, or an ethylene-vinyl alcohol copolymer), and a silica-deposited film (an item with silica deposited on a base material such as polyethylene, polypropylene, nylon, polyethylene terephthalate, or an ethylene-vinyl alcohol copolymer).

The protective layer is a layer that is present as at least a part of an outermost layer of the laminate and thus can reduce the influence from the surrounding environment on a constituent present below the protective layer (the deterioration of the constituent). Therefore, the protective layer may have one or more functions selected from the group consisting of barrier property, oil resistance, solvent resistance, heat resistance, abrasion resistance, impact resistance, weather resistance, and light resistance. When the protective layer covers throughout an outermost layer of the laminate, the function can be further exhibited. Examples of the protective layer include a resin layer, a paper layer, and a metal foil.

As the heat seal layer, those known in the art can be used. The heat seal layer is preferably a resin layer having heat sealability. The heat seal layer preferably contains a water-dispersible resin and optionally additives. Examples of the water-dispersible resin include polyolefin resins, acrylic resins such as a styrene/acrylic copolymer and an ethylene-(meth)acrylic acid copolymer, an ethylene-vinyl acetate copolymer, polyester resins, rubber-based resins, urethane resins, polyamide resins, and combinations thereof. Examples of optional additives include lubricants such as paraffin wax, carnauba wax and polyolefin-based wax, pigments such as silica and kaolin, and combinations thereof. The heat seal layer may have a barrier property, in which case the layer may function as a heat seal layer and a barrier layer.

When the support is a film having a barrier property or a protective property, the film can also function as a barrier layer or a protective layer.

Examples of a specific layer configuration of the laminate in the present invention, which comprises a water-soluble film and a support and may have an optional layer (barrier layer, protective layer, heat seal layer), include the following configurations. The following configurations are each written from the layer that is to serve as the outermost layer (the layer opposite from the layer in contact with contents) when used as, for example, a packaging material.

Water-soluble film/paper or support film or metal foil,

gas barrier layer or water vapor barrier layer/water-soluble film/paper or support film or metal foil,
water vapor barrier layer/gas barrier layer/water-soluble film/paper or support film or metal foil,
gas barrier layer/water vapor barrier layer/water-soluble film/paper or support film or metal foil,
protective layer/water-soluble film/paper or support film or metal foil,
protective layer/gas barrier layer or water vapor barrier layer/water-soluble film/paper or support film or metal foil,
protective layer/water vapor barrier layer/gas barrier layer/water-soluble film/paper or support film or metal foil,
protective layer/gas barrier layer/water vapor barrier layer/water-soluble film/paper or support film or metal foil,
protective layer/water-soluble film/gas barrier layer or water vapor barrier layer/paper or support film or metal foil,
protective layer/water-soluble film/water vapor barrier layer/gas barrier layer/paper or support film or metal foil,
protective layer/water-soluble film/gas barrier layer/water vapor barrier layer/paper or support film or metal foil,
protective layer/gas barrier layer or water vapor barrier layer/water-soluble film/paper or support film or metal foil/gas barrier layer or water vapor barrier layer,
protective layer/water vapor barrier layer/gas barrier layer/water-soluble film/paper or support film or metal foil/gas barrier layer or water vapor barrier layer,
protective layer/gas barrier layer/water vapor barrier layer/water-soluble film/paper or support film or metal foil/gas barrier layer or water vapor barrier layer,
protective layer/water vapor barrier layer/gas barrier layer/water-soluble film/paper or support film or metal foil/gas barrier layer/water vapor barrier layer,
protective layer/water vapor barrier layer/gas barrier layer/water-soluble film/paper or support film or metal foil/water vapor barrier layer/gas barrier layer,
protective layer/gas barrier layer/water vapor barrier layer/water-soluble film/paper or support film or metal foil/gas barrier layer/water vapor barrier layer,
protective layer/gas barrier layer/water vapor barrier layer/water-soluble film/paper or support film or metal foil/water vapor barrier layer/gas barrier layer,

a layer configuration including a heat seal layer on a side opposite from a layer serving as the outermost layer in any of the layer configurations listed above,
a layer configuration including a heat seal layer in place of the protective layer in any of the layer configurations listed above, for example, heat seal layer/water-soluble film/paper or support film or metal foil,
a layer configuration including an adhesive layer at one or more locations between layers in any of the layer configurations listed above, for example, heat seal layer/adhesive layer/water-soluble film/paper or support film or metal foil.

More specific layer configurations include, for example, the following configurations.

Water-soluble film/paper,
LLDPE/water-soluble film/paper,
LLDPE/adhesive layer/water-soluble film/paper,
LDPE/water-soluble film/paper,
LDPE/adhesive layer/water-soluble film/paper,
HDPE/water-soluble film/paper,
HDPE/adhesive layer/water-soluble film/paper,
CPE (cast polyethylene)/water-soluble film/paper,
CPE (cast polyethylene)/adhesive layer/water-soluble film/paper,
polyethylene formed from a polyethylene emulsion/water-soluble film/paper,
polyethylene formed from a polyethylene emulsion/adhesive layer/water-soluble film/paper,
uniaxially stretched polyethylene/water-soluble film/paper,

uniaxially stretched polyethylene/adhesive layer/water-soluble film/paper,
biaxially stretched polyethylene/water-soluble film/paper,
biaxially stretched polyethylene/adhesive layer/water-soluble film/paper,
polypropylene/water-soluble film/paper,
polypropylene/adhesive layer/water-soluble film/paper,
uniaxially stretched polypropylene/water-soluble film/paper,
uniaxially stretched polypropylene/adhesive layer/water-soluble film/paper,
biaxially stretched polypropylene/water-soluble film/paper,
biaxially stretched polypropylene/adhesive layer/water-soluble film/paper,
PLA/water-soluble film/paper,
PLA/adhesive layer/water-soluble film/paper,
PHA/water-soluble film/paper,
PHA/adhesive layer/water-soluble film/paper,
PHBH/water-soluble film/paper,
PHBH/adhesive layer/water-soluble film/paper,
PCL/water-soluble film/paper,
PCL/adhesive layer/water-soluble film/paper,
PBAT/water-soluble film/paper,
PBAT/adhesive layer/water-soluble film/paper,
PBS/water-soluble film/paper,
PBS/adhesive layer/water-soluble film/paper.

<Method for producing laminate>

The method for producing the laminate of the present invention is not particularly limited, and the laminate can be produced by a method publicly-known in the art.

The laminate of the present invention can be produced, for example, by a method including the same steps as (1) to (3) described in the method for producing a water-soluble film. In the laminate, there may be a single layer of the coating film or a plurality of layers of the coating film. It is also possible to produce a multilayer laminate including arbitrary layers in an arbitrary lamination order by repeating an operation of coating of a coating liquid (coating agent) on a support and removing a solvent.

The laminate of the present invention can also be produced, for example, by integrating a water-soluble film produced by a melt extrusion film formation method, a blown film extrusion method or the like in which a film-forming dope (water-soluble film forming material) obtained using an extruder or the like is extruded through a T-die or the like to form a film, with a support. The integrating method is not limited, and examples thereof include a method in which water is applied to a surface of a water-soluble film, and the applied surface is bonded to a support to integrate the water-soluble film with the support, a method in which a water-soluble film and a support are integrated by thermocompression bonding, a method in which a water-soluble film and a support are integrated with a pressure-sensitive adhesive or an adhesive interposed therebetween, and a blown film extrusion method in which a water-soluble film forming material and a material for forming a support (film) are co-extruded.

In the case of integration by thermocompression bonding, the conditions thereof may be appropriately selected according to the type of the polysaccharide(s) contained in the water-soluble film and the type and amount of the plasticizer in the case of being contained. For example, the integration can be conducted by pressure bonding for 0.1 to 10 seconds at a temperature of 100 to 200°C and a pressure of 0.1 to 30 MPa.

When the integration is conducted with the interposition of a pressure-sensitive adhesive or an adhesive, such a pressure-sensitive adhesive or an adhesive is known in the art.

The laminate of the present invention can also be produced as a multilayer laminate by bonding a plurality of water-soluble films obtained by a melt extrusion film formation method, a blown film extrusion method, or the like to a support by a publicly-known method.

When the laminate includes a plurality of water-soluble films, a water-soluble film produced by coating and a water-soluble film produced by a melt extrusion film formation method, a blown film extrusion method, or the like may be included in combination.

[Pouch]

The present invention encompasses a pouch comprising the water-soluble film of the present invention. Since the pouch of the present invention comprises the water-soluble film, the pouch has high water solubility and is excellent in dynamic strength. Furthermore, in a preferred embodiment of the present invention, the pouch of the present invention can

achieve both high low-temperature solubility and high dynamic strength.

In one embodiment of the invention, the pouch of the invention dissolves in water at 10°C preferably within 2000 seconds, more preferably within 1500 seconds, still more preferably within 1000 seconds, further preferably within 700 seconds, particularly preferably within 600 seconds, and particularly more preferably within 500 seconds. The lower limit of the dissolution time is not particularly limited, and it is preferable that the dissolution time is as short as possible. The solubility in water at 10°C (low-temperature solubility) of the pouch can be adjusted to the above upper limit or less by appropriately adjusting, for example, the type and/or amount of the components contained in the water-soluble film constituting the pouch; and the production conditions of the pouch (for example, the amount of water to be applied, the temperature, and the pressure at the time of water sealing, and the temperature and the pressure at the time of heat sealing). The solubility of the pouch in water at 10°C can be determined, for example, by the method described in Examples described later.

The film contained in the pouch may be a monolayer film or a multilayer film. When the pouch includes a monolayer film (or consists of a monolayer film), the monolayer film is the water-soluble film described above. When the pouch includes a multilayer film (or consists of a multilayer film), the multilayer film may be a laminate of a plurality of the water-soluble films described above, or may be a laminate of the water-soluble film described above and another water-soluble film other than the water-soluble film described above. From the viewpoint of enhancing the water solubility, the dynamic strength, and the low-temperature solubility of a pouch, the pouch is preferably composed of a single layer or multiple layers of the water-soluble film, and from the viewpoint of production efficiency, the pouch is more preferably composed of a single layer of the water-soluble film.

The pouch is not particularly limited as long as it can package a substance (preferably contents), and may be one in which the inside is sealed or one in which a part thereof is open. Although not limited, the pouch may be in the form of, for example, a two-way pouch, a three-way pouch, a flat pouch, a standing pouch, a gusset pouch, a bottom gusset pouch, a twin pouch, a spout pouch, a side seal pouch, a bottom seal pouch, or the like, or may be in the form of a container, a cup, or the like. In one embodiment of the present invention, the pouch may be partially open, but it is preferable that the inside is sealed. In such an embodiment, the pouch is more preferably one which contains the contents therein and whose inside is sealed.

[Method for producing pouch]

The method for producing the pouch of the present invention from the water-soluble film is not particularly limited, and the pouch can be produced by a method publicly-known in the art.

The pouch of the present invention can be produced, for example, by a method including a step of sealing one or two or more water-soluble films into a bag shape. Further, a pouch containing contents can be produced, for example, by a method including a step of feeding the contents into a film formed in a bag shape and a step of sealing the feeding port.

Examples of the method of sealing the water-soluble film include a method of sealing by applying water to a film surface and bonding on the applied surface (also referred to as water sealing), a method of sealing by thermocompression bonding (also referred to as heat sealing), and a method of sealing with a pressure-sensitive adhesive. Heat sealing is preferable from the viewpoint of not requiring any additional agent, and water sealing is preferable from the viewpoint of not requiring heat.

In one embodiment of the present invention, water sealing can be suitably used because the water-soluble film has high adhesive strength due to moisture. In another embodiment of the present invention, the water-soluble film has high water sealability and low heat sealability. Due to the low heat sealability, when the film is produced by a roll-to-roll method, the film is less likely to adhere to a roll, and damage during the production can be effectively suppressed. Furthermore, due to the high water sealability, the produced water-soluble film can be easily formed into a pouch by moisture.

[Use of pouch]

The pouch of the present invention is excellent in water solubility and dynamic characteristics. In addition, in a preferred embodiment of the present invention, the pouch of the present invention is excellent in low-temperature solubility, and thus can be suitably used particularly for applications in which the pouch is used by being dissolved in cold water. Therefore, the pouch of the present invention preferably contains at least one selected from the group consisting of a cleaning agent, a softener, and a perfume therein. The physical properties of the contents are not particularly limited, and may be acidic, neutral, or alkaline. The form of the contents may be any of a powder form, a lump form, a gel form, and a liquid form.

[Packaging material]

The water-soluble film of the present invention can be used as a packaging material comprising the water-soluble film. Since the packaging material in such an embodiment comprises a polysaccharide and a plasticizer, wherein the content of the plasticizer is 45 to 85 mass% based on the mass of the water-soluble film, the packaging material has high water solubility (preferably, high low-temperature solubility), and is excellent in dynamic strength. The water-soluble film constituting the packaging material is preferably the same as the water-soluble film described in the above [Water-soluble film] section, and preferably has the same solubility and dynamic strength. The packaging material preferably has solubility and dynamic strength the same as those of the pouch described in the above [Pouch] section.

The packaging material is a film to be used for packaging, and may include a thin film, a thick film, or the like, or may be in the form of a container, a cup, a tube, a tray, a bottle, or the like. In one embodiment of the present invention, the packaging material may contain a substance, preferably at least one selected from the group consisting of a cleaning agent, a softener, and a perfume therein, similarly to the pouch described above.

EXAMPLES

Hereinafter, the present invention will be described more specifically based on Examples and Comparative Examples, but the present invention is not limited to the following Examples.

Molecular weight of polysaccharide

About 20 μg of each of the polysaccharides used in Examples and Comparative Examples was subjected to gel filtration HPLC under the following conditions, and the weight average molecular weight (Mw) and the number average molecular weight (Mn) were measured. The measurement solvent was selected from water or dimethyl sulfoxide (DMSO) in view of the solubility of each polysaccharide.

(Gel filtration HPLC conditions)

Eluent: 0.1M aqueous Na nitrate solution
Column: One TSK GEL α-M was used.
Column temperature: 40°C
Flow rate: 1 mL/min
Sample concentration: 0.1 w/v%
Sample preparation: After dissolving the sample by stirring at 80°C for 2.5 hours, stirring operation was further conducted at 90°C for 30 minutes.
Filter: 0.45 μm PP filter (Whatman)
Injection amount: 100 μL
Authentic sample: PEO/PEG
Measurement time: 18 minutes
Liquid feeding unit: GPC-101 (Shodex)
Detector: RI
or
Eluent: 5mM Na nitrate/DMSO
Column: One TSK GEL α-M was used.
Column temperature: 60°C
Flow rate: 0.8 mL/min
Sample concentration: 0.2 w/v%
Sample preparation: After dissolving the sample by stirring at 60°C for 1 hour, stirring operation was further conducted at 65°C for 2.5 hours.
Filtration: 0.45 μm PP filter (Whatman)
Injection amount: 100 μL
Authentic sample: PMMA-R, Y, G
Measurement time: 18 minutes
Liquid feeding unit: GPC-101 (Shodex)
Detector: RI

Preparation of water-soluble film

<Example 1>

Five grams of tamarind seed gum (weight average molecular weight: 3,700 kDa, number average molecular weight: 429 kDa; "GLYLOID (registered trademark) 6C" manufactured by MP Gokyo Food & Chemical Co., Ltd.) as a polysaccharide was added to water, and the mixture was heated and stirred at 95°C for 2 hours, affording an aqueous solution having a concentration of 4%. Five grams of glycerin as a plasticizer was added thereto, and a coating liquid was thereby prepared. The coating liquid was applied onto a polyethylene terephthalate film with a bar coater, dried with hot air at 60°C for 1 hour, and the resulting dry coating film was peeled off from the polyethylene terephthalate film base material, affording a film having a thickness of about 50 μm.

<Examples 2 to 5>

Films were obtained in the same manner as in Example 1 except that the blending amounts of tamarind seed gum and glycerin were changed to the amounts shown in Table 1.

<Examples 6 to 8>

Films were obtained in the same manner as in Example 1 except that ethylene glycol as a plasticizer was used instead of glycerin, and each component was added in the blending amount shown in Table 1.

<Examples 9 to 11>

Films were obtained in the same manner as in Example 1 except that fructose as a plasticizer was used instead of glycerin, and each component was added in the blending amount shown in Table 1.

<Examples 12 to 17>

Films were obtained in the same manner as in Example 1 except that κ-carrageenan (weight average molecular weight: 826 kDa, number average molecular weight: 48 kDa; GENUGEL carrageenan type JPE-126 manufactured by Sansho Co., Ltd.) as a polysaccharide B was added in addition to tamarind seed gum at the time of the addition of tamarind seed gum as a polysaccharide A, and each component was added in the blending amount shown in Table 1.

<Example 18>

A film was obtained in the same manner as in Example 1 except that xanthan gum (weight average molecular weight: 92 kDa, number average molecular weight: 16 kDa; KIMICA XANTHAN PH-R3EC manufactured by KIMICA Corporation) as a polysaccharide B was added in addition to tamarind seed gum at the time of the addition of tamarind seed gum as a polysaccharide A, and each component was added in the blending amount shown in Table 1.

<Example 19>

A film was obtained in the same manner as in Example 1 except that guar gum (weight average molecular weight: 93 kDa, number average molecular weight: 17 kDa; SUPERGEL CSA200/50 manufactured by Sansho Co., Ltd.) as a polysaccharide B was added in addition to tamarind seed gum at the time of the addition of tamarind seed gum as a polysaccharide A, and each component was added in the blending amount shown in Table 1.

<Example 20>

A film was obtained in the same manner as in Example 1 except that locust bean gum (weight average molecular weight: 96 kDa, number average molecular weight: 26 kDa; GENU (registered trademark) GUM type RL-200Z manufactured by Sansho Co., Ltd.) as a polysaccharide B was added in addition to tamarind seed gum at the time of the addition of tamarind seed gum as a polysaccharide A, and each component was added in the blending amount shown in Table 1.

<Example 21>

A film was obtained in the same manner as in Example 1 except that xanthan gum (weight average molecular

weight: 92 kDa, number average molecular weight: 16 kDa; KIMICA XANTHAN PH-R3EC manufactured by KIMICA Corporation) as a polysaccharide B-1 and guar gum (weight average molecular weight: 93 kDa, number average molecular weight: 17 kDa; SUPERGEL CSA200/50 manufactured by Sansho Co., Ltd.) as a polysaccharide B-2 were added in addition to tamarind seed gum at the time of the addition of tamarind seed gum as a polysaccharide A, and each component was added in the blending amount shown in Table 1.

<Example 22>

A film was obtained in the same manner as in Example 1 except that xanthan gum (weight average molecular weight: 92 kDa, number average molecular weight: 16 kDa; KIMICA XANTHAN PH-R3EC manufactured by KIMICA Corporation) as a polysaccharide B-1 and locust bean gum (weight average molecular weight: 96 kDa, number average molecular weight: 26 kDa; GENU (registered trademark) GUM type RL-200Z manufactured by Sansho Co., Ltd.) as a polysaccharide B-2 were added in addition to tamarind seed gum at the time of the addition of tamarind seed gum as a polysaccharide A, and each component was added in the blending amount shown in Table 1.

<Examples 23 to 26>

Films were obtained in the same manner as in Example 1 except that κ-carrageenan (weight average molecular weight: 826 kDa, number average molecular weight: 48 kDa; GENUGEL carrageenan type JPE-126 manufactured by Sansho Co., Ltd.) as a polysaccharide was used instead of tamarind seed gum, and each component was added in the blending amount shown in Table 1.

<Example 27>

Films were obtained in the same manner as in Example 1 except that ι-carrageenan (weight average molecular weight: 688 kDa, number average molecular weight: 32 kDa; GENUTINE VCS-J manufactured by Sansho Co., Ltd.) as a polysaccharide was used instead of tamarind seed gum, and each component was added in the blending amount shown in Table 1.

<Example 28>

A film was obtained in the same manner as in Example 1 except that tara gum (weight average molecular weight: 352 kDa, number average molecular weight: 118 kDa; SPINOGUM D manufactured by Sansho Co., Ltd.) as a polysaccharide was used instead of tamarind seed gum, and each component was added in the blending amount shown in Table 1.

<Example 29>

A film was obtained in the same manner as in Example 1 except that guar gum (weight average molecular weight: 93 kDa, number average molecular weight: 17 kDa; SUPERGEL CSA200/50 manufactured by Sansho Co., Ltd.) as a polysaccharide was used instead of tamarind seed gum, and each component was added in the blending amount shown in Table 1.

<Comparative Examples 1, 2>

Films were obtained in the same manner as in Example 1 except that the blending amounts of tamarind seed gum and glycerin were changed to the amounts shown in Table 1.

<Comparative Example 3>

A Film was obtained in the same manner as in Example 1 except that ethylene glycol as a plasticizer was used instead of glycerin, and each component was added in the blending amount shown in Table 1.

<Comparative Examples 4 to 5>

Films were obtained in the same manner as in Example 1 except that fructose as a plasticizer was used instead of glycerin, and each component was added in the blending amount shown in Table 1.

<Comparative Examples 6 to 8>

Films were obtained in the same manner as in Example 1 except that κ-carrageenan (weight average molecular weight: 826 kDa, number average molecular weight: 48 kDa; GENUGEL carrageenan type JPE-126 manufactured by Sansho Co., Ltd.) as a polysaccharide was used instead of tamarind seed gum, sorbitol as a plasticizer was used instead of glycerin, and each component was added in the blending amount shown in Table 1.

<Comparative Examples 9 to 11>

Films were obtained in the same manner as in Example 1 except that ι-carrageenan (weight average molecular weight: 688 kDa, number average molecular weight: 32 kDa; GENUTINE VCS-J manufactured by Sansho Co., Ltd.) as a polysaccharide was used instead of tamarind seed gum, sorbitol as a plasticizer was used instead of glycerin, and each component was added in the blending amount shown in Table 1.

<Comparative Examples 12, 13>

Films were obtained in the same manner as in Example 1 except that sodium alginate (weight average molecular weight: 104 kDa, number average molecular weight: 43 kDa; KIMICAALGIN I-8 manufactured by KIMICA Corporation) as a polysaccharide was used instead of tamarind seed gum, sorbitol as a plasticizer was used instead of glycerin, and each component was added in the blending amount shown in Table 1.

<Comparative Example 14>

A film was obtained in the same manner as in Example 1 except that xanthan gum (weight average molecular weight: 92 kDa, number average molecular weight: 16 kDa; KIMICA XANTHAN PH-R3EC manufactured by KIMICA Corporation) as a polysaccharide was used instead of tamarind seed gum, and each component was added in the blending amount shown in Table 1.

Film thickness of water-soluble film

The film thickness of the water-soluble film prepared in Examples and Comparative Examples was measured with a micrometer. The thicknesses of arbitrary five or more points of the film were measured, and the average value thereof was taken as the film thickness. The film thickness of each water-soluble film is shown in Table 1.

[Table 1-1]

| | | Polysaccharide A | | Polysaccharide B-1 | | Polysaccharide B-2 | | Plasticizer | | Thickness of film (μm) |
|---|---|---|---|---|---|---|---|---|---|---|
| | | Type | Blending amount | Type | Blending amount | Type | Blending amount | Type | Blending amount | |
| Example | 1 | Tamarind seed gum | 50 | - | - | - | - | Glycerin | 50 | 85 |
| | 2 | Tamarind seed gum | 45 | - | - | - | - | Glycerin | 55 | 103 |
| | 3 | Tamarind seed gum | 40 | - | - | - | - | Glycerin | 60 | 77 |
| | 4 | Tamarind seed gum | 35 | - | - | - | - | Glycerin | 65 | 50 |
| | 5 | Tamarind seed gum | 30 | - | - | - | - | Glycerin | 70 | 85 |
| | 6 | Tamarind seed gum | 50 | - | - | - | - | Ethylene glycol | 50 | 42 |
| | 7 | Tamarind seed gum | 40 | - | - | - | - | Ethylene glycol | 60 | 34 |
| | 8 | Tamarind seed gum | 30 | - | - | - | - | Ethylene glycol | 70 | 25 |
| | 9 | Tamarind seed gum | 50 | - | - | - | - | Fructose | 50 | 74 |
| | 10 | Tamarind seed gum | 30 | - | - | - | - | Fructose | 70 | 97 |
| | 11 | Tamarind seed gum | 20 | - | - | - | - | Fructose | 80 | 88 |
| | 12 | Tamarind seed gum | 38 | κ-Carrageenan | 2 | - | - | Glycerin | 60 | 82 |
| | 13 | Tamarind seed gum | 36 | κ-Carrageenan | 4 | - | - | Glycerin | 60 | 71 |
| | 14 | Tamarind seed gum | 32 | κ-Carrageenan | 8 | - | - | Glycerin | 60 | 76 |
| | 15 | Tamarind seed gum | 39 | κ-Carrageenan | 2 | - | - | Glycerin | 59 | 78 |
| | 16 | Tamarind seed gum | 38 | κ-Carrageenan | 4 | - | - | Glycerin | 58 | 77 |
| | 17 | Tamarind seed gum | 36 | κ-Carrageenan | 9 | - | - | Glycerin | 55 | 71 |
| | 18 | Tamarind seed gum | 40.5 | Xanthan gum | 4.5 | - | - | Glycerin | 55 | 56 |
| | 19 | Tamarind seed gum | 40.5 | Guar gum | 4.5 | - | - | Glycerin | 55 | 53 |
| | 20 | Tamarind seed gum | 40.5 | Locust bean gum | 4.5 | - | - | Glycerin | 55 | 50 |
| | 21 | Tamarind seed gum | 40.5 | Xanthan gum | 0.9 | Guar gum | 3.6 | Glycerin | 55 | 52 |
| | 22 | Tamarind seed gum | 40.5 | Xanthan gum | 2.25 | Locust bean gum | 2.25 | Glycerin | 55 | 62 |

(continued)

| | | Polysaccharide A | | Polysaccharide B-1 | | Polysaccharide B-2 | | Plasticizer | | Thickness of film (μm) |
|---|---|---|---|---|---|---|---|---|---|---|
| | | Type | Blending amount | Type | Blending amount | Type | Blending amount | Type | Blending amount | |
| | 23 | κ-Carrageenan | 40 | - | - | - | - | Glycerin | 60 | 94 |
| | 24 | κ-Carrageenan | 30 | - | - | - | - | Glycerin | 70 | 75 |
| | 25 | κ-Carrageenan | 35 | - | - | - | - | Glycerin | 65 | 69 |
| | 26 | κ-Carrageenan | 35 | - | - | - | - | Glycerin | 65 | 78 |
| | 27 | ι -Carrageenan | 40 | - | - | - | - | Glycerin | 60 | 82 |
| | 28 | Tara gum (SPINO-GUM D) | 30 | - | - | - | - | Glycerin | 70 | 74 |
| | 29 | Guar gum | 30 | - | - | - | - | Glycerin | 70 | 97 |

[Table 1-2]

| | | Polysaccharide A | | Polysaccharide B-1 | | Polysaccharide B-2 | | Plasticizer | | Thickness of film (μm) |
|---|---|---|---|---|---|---|---|---|---|---|
| | | Type | Blending amount [mass%] | Type | Blending amount [mass%] | Type | Blending amount [mass%] | Type | Blending amount [mass%] | |
| Comparative Example | 1 | Tamarind seed gum | 70 | - | - | - | - | Glycerin | 30 | 63 |
| | 2 | Tamarind seed gum | 10 | - | - | - | - | Glycerin | 90 | -* |
| | 3 | Tamarind seed gum | 10 | - | - | - | - | Ethylene glycol | 90 | * |
| | 4 | Tamarind seed gum | 70 | - | - | - | - | Fructose | 30 | 71 |
| | 5 | Tamarind seed gum | 10 | - | - | - | - | Fructose | 90 | -* |
| | 6 | κ-Carrageenan | 70 | - | - | - | - | Sorbitol | 30 | 56 |
| | 7 | r-Carrageenan | 65 | - | - | - | - | Sorbitol | 35 | 67 |
| | 8 | κ-Carrageenan | 10 | - | - | - | - | Sorbitol | 90 | -* |
| | 9 | ι -Carrageenan | 70 | - | - | - | - | Sorbitol | 30 | 78 |
| | 10 | ι -Carrageenan | 65 | - | - | - | - | Sorbitol | 35 | 71 |
| | 11 | ι -Carrageenan | 10 | - | - | - | - | Sorbitol | 90 | -* |
| | 12 | Na alginate | 70 | - | - | - | - | Sorbitol | 30 | 48 |
| | 13 | Na alginate | 65 | - | - | - | - | Sorbitol | 35 | 54 |
| | 14 | Xanthan gum | 70 | - | - | - | - | Glycerin | 30 | 5 |

* A film uniform in film thickness was not obtained

Evaluation of water-soluble film

<Water solubility of film>

Each of the films prepared in Examples was added to warm water at 90°C the film was stirred for 5 minutes to be dissolved, and then the amount of the solid component that did not pass through the filter (21 μm) was measured, followed by evaluation according to the following evaluation criteria. The mass of the film added was 0.1 parts by mass based on 100 parts by mass of warm water at 90°C.

A case where the amount of the solid component was 10 mass% or less was evaluated as A, and a case where the amount of the solid component was more than 10 mass% was evaluated as B.

<Complete dissolution time in cold water (low-temperature solubility)>

Each of the films prepared in Examples and Comparative Examples was cut into a rectangle of 30 mm × 40 mm, and this was inserted into a slide mount. Separately, a glass beaker having a capacity of 600 ml and containing 500 ml of distilled water was placed in a thermostatic bath adjusted to 10°C, and stirring was conducted at 400 rpm using a 5 cm rotor. After the temperature of the distilled water in the beaker reached 10°C, the slide mount was immersed in stirred water. The dissolution state of the film was visually observed, the time (seconds) until the film was completely dissolved was measured, and evaluation was conducted according to the following evaluation criteria. When a film having a film thickness different from 50 μm was used, the complete dissolution time was converted to a value of a film thickness of 50 μm according to the following equation.

Converted complete dissolution time (seconds) = $[50/\text{thickness of film } (\mu m)]^2 \times$ sample complete dissolution time (seconds)

A case where the converted complete dissolution time was less than 600 seconds was recorded as A, a case where the converted complete dissolution time was 600 seconds or more and less than 1500 seconds was recorded as B, and a case where the converted complete dissolution time was 1500 seconds or more was recorded as C.

<Toughness of film>

The films prepared in Examples and Comparative Examples were stored under an environment of 23°C and a humidity of 50% RH for 7 days, and then each of the films was cut into five specimens each having a width of 10 mm and a length of 120 mm. For each of the prepared test pieces, the maximum stress and the breaking elongation were measured at a distance between chucks of 70 mm and a tensile speed of 500 mm/min using an autograph (device name: AG-5000B, Shimadzu Corporation), and the average values thereof were determined. The value of maximum stress × breaking elongation was defined as the toughness of the film.

The results of the evaluations are shown in Table 2.

[Table 2-1]

| | | Maximum stress [Mpa] | Breaking elongation [%] | Toughness | Solubility in water | Cold water dissolution time |
|---|---|---|---|---|---|---|
| | 1 | 31 | 52 | 1612 | A | A |
| | 2 | 23 | 89 | 2047 | A | A |
| | 3 | 18 | 92 | 1656 | A | A |
| | 4 | 17 | 94 | 1598 | A | A |
| | 5 | 14 | 94 | 1316 | A | A |
| | 6 | 56 | 26.1 | 1457 | A | A |
| | 7 | 53 | 33.3 | 1777 | A | A |
| | 8 | 50 | 28.1 | 1404 | A | A |
| | 9 | 82 | 13.5 | 1111 | A | A |
| | 10 | 37 | 39.7 | 1466 | A | A |

(continued)

| | | Maximum stress [Mpa] | Breaking elongation [%] | Toughness | Solubility in water | Cold water dissolution time |
|---|---|---|---|---|---|---|
| Example | 11 | 22 | 59.1 | 1273 | A | A |
| | 12 | 21 | 97 | 2037 | A | B |
| | 13 | 24 | 102 | 2448 | A | B |
| | 14 | 22 | 96 | 2112 | A | B |
| | 15 | 23 | 94 | 2162 | A | B |
| | 16 | 24 | 91 | 2184 | A | B |
| | 17 | 28 | 86 | 2408 | A | B |
| | 18 | 25 | 79 | 1975 | A | A |
| | 19 | 19 | 82 | 1558 | A | A |
| | 20 | 25 | 93 | 2325 | A | A |
| | 21 | 19 | 82 | 1558 | A | A |
| | 22 | 24 | 84 | 2016 | A | A |
| | 23 | 22 | 81.1 | 1815 | A | B |
| | 24 | 13 | 82.6 | 1048 | A | B |
| | 25 | 14 | 81 | 1131 | A | B |
| | 26 | 13 | 78.4 | 1044 | A | B |
| | 27 | 12 | 143.2 | 1688 | A | B |
| | 28 | 5.0 | 160 | 821 | A | C |
| | 29 | 6.3 | 148 | 927 | A | C |

[Table 2-2]

| | | Maximum stress [Mpa] | Breaking elongation [%] | Toughness | Solubility in water | Cold water dissolution time |
|---|---|---|---|---|---|---|
| Comparative Example | 1 | 51 | 13.0 | 663 | A | A |
| | 2 | The plasticizer bled out, and a uniform film could not be obtained. | | | - | - |
| | 3 | The plasticizer bled out, and a uniform film could not be obtained. | | | - | - |
| | 4 | A sufficiently plasticized film could not be obtained. | | | A | A |
| | 5 | The plasticizer bled out, and a uniform film could not be obtained. | | | - | - |
| | 6 | 79 | 4.6 | 362 | A | B |
| | 7 | 64 | 4.6 | 293 | A | B |
| | 8 | The plasticizer bled out, and a uniform film could not be obtained. | | | - | - |
| | 9 | 50 | 7.3 | 366 | A | A |
| | 10 | 43 | 8.6 | 367 | A | A |
| | 11 | The plasticizer bled out, and a uniform film could not be obtained. | | | - | - |
| | 12 | 28 | 1.9 | 52 | A | B |

(continued)

| | | Maximum stress [Mpa] | Breaking elongation [%] | Toughness | Solubility in water | Cold water dissolution time |
|---|---|---|---|---|---|---|
| | 13 | 38 | 2.2 | 84 | A | B |
| | 14 | Since the viscosity of the coating liquid was high and the film thickness became thin, physical properties could not be measured. | | | | |

As shown in Table 2, it was confirmed that the films prepared in Examples 1 to 29 were water-soluble films, and were higher in dynamic strength as compared with Comparative Examples 1 to 14. Therefore, the water-soluble film of the present invention is excellent in dynamic strength.

Preparation and evaluation of pouches

Water was applied to an obtained water-soluble film, and the applied surface was bonded to prepare a pouch, and the sealability of the film, the compression test of the pouch, and the water solubility of the pouch were evaluated.

The pouches prepared in Examples and Comparative Examples have high compressive strength and are excellent in dynamic strength. In addition, since the pouches prepared in Examples and Comparative Examples are each made of a water-soluble film, the pouches reflect the physical properties of the water-soluble film and are excellent in solubility at a low temperature. Furthermore, the water-soluble films constituting the pouches have good sealability.

Preparation of laminate

<Example 30>

5 g of tamarind seed gum (Glyate (registered trademark)) and 5 g of fructose were added to pure water such that the total concentration was 25 mass%, and the mixture was heated and stirred at 90°C for 1 hour, thereby affording a dissolved coating liquid. The coating liquid obtained was cooled to 25°C and applied to paper (bleached kraft paper: 80 gsm) as a support using a bar coater such that the thickness of the coating liquid after application (hereinafter, it may be simply referred to as "thickness of a coating liquid") was 9 μm. The wet coating film on the support was dried in a hot air dryer at 80°C for 30 minutes. The same coating liquid was applied again such that the thickness of the coating liquid was 22 μm, followed by drying in a hot air dryer at 80°C for 30 minutes, affording a laminate including the support and a coating film.

<Examples 31 to 34 and Comparative Examples 15 to 17>

Laminates each including a support and a coating film were obtained in the same manner as in Example 30 except that the materials and production conditions as described in the following Table 3 were used and employed.

<Thickness of coating film>

The thickness of the coating film was calculated by the following equation.

Thickness of coating film [μm] = concentration of coating liquid [mass%] × thickness of coating liquid [μm]/100

Concentration of coating liquid [mass%] = {(mass [g] of coating liquid - mass [g] of water contained in coating liquid)/ mass [g] of coating liquid} × 100

The total thickness of the coating film when the coating was conducted twice was calculated by replacing the "thickness of coating liquid" in the above equation with the "total thickness of coating liquid".

<Flex resistance>

The laminate was folded with the coating surface facing inward. A 2 kg rubber roller was reciprocated once from one end to the other end of the folded region (crease), and the crease was thereby fixed. Toluene colored with food red was applied over 10 cm of the crease portion on the coated surface side, and then it was confirmed whether or not there was a bleed-through (small red spots or coloring of the entire surface of the coated surface) to the back surface (uncoated

surface). When there was no bleed-through, the same operation was repeated again to confirm whether there was no bleed-through. The maximum number of times of folding without such bleed-through was defined as flex resistance [times], and the maximum value was decided to be 5 times. As this value is larger, the coating layer is better in mechanical strength, and cracks are less prone to occur at the time of folding.

[Oxygen transmission rate (OTR)]

The oxygen transmission rate (cc/$m^2$·day·atm) of a laminate was measured under the following conditions using an oxygen transmission rate analyzer (OXYSENSE MODEL 8101e manufactured by Systech Illinois).

Temperature: 23°C
Humidity on oxygen supply side: 50% RH
Humidity on carrier gas side: 50% RH
Carrier gas flow rate: 10 mL/min
Oxygen pressure: 1.0 atm
Carrier gas pressure: 1.0 atm

The results of the evaluations are shown in Table 3.

[Table 3]

| | | Composition of coating liquid (excluding pure water) | | | | Conditions for manufacturing laminate | | | | | Properties of laminate | |
|---|---|---|---|---|---|---|---|---|---|---|---|---|
| | | Polysaccharide A | | Plasticizer | | Type of support | Concentration of coating liquid | Thickness of coating liquid | | Dry coating film (total) thickness | Flex resistance | OTR |
| | | | | | | | | First application | Second application | | | |
| | | Type | [mass%] | Type | [mass%] | | [mass%] | [μm] | [μm] | [μm] | [times] | [cc/m²·day·atm] |
| Example | 30 | Tamarind seed gum (Glyate (registered trademark)) | 50 | Fructose | 50 | Bleached kraft paper 80 gsm | 25 | 9 | 22 | 8 | 1 | - |
| | 31 | Tamarind seed gum (Glyate (registered trademark)) | 30 | Fructose | 70 | Bleached kraft paper 80 gsm | 25 | 9 | 22 | 8 | 2 | - |
| | 32 | Tamarind seed gum (Glyate (registered trademark)) | 20 | Fructose | 80 | Bleached kraft paper 80 gsm | 25 | 9 | 22 | 8 | 5 | 3.2 |
| | 33 | Carrageenan | 50 | Fructose | 50 | Bleached kraft paper 80 gsm | 25 | 9 | 22 | 8 | 5 | - |
| | 34 | Carrageenan | 20 | Fructose | 80 | Bleached kraft paper 80 gsm | 25 | 9 | 22 | 8 | 5 | - |

(continued)

| | | Composition of coating liquid (excluding pure water) | | | | Conditions for manufacturing laminate | | | | | Properties of laminate | |
|---|---|---|---|---|---|---|---|---|---|---|---|---|
| | | Polysaccharide A | | Plasticizer | | Type of support | Concentration of coating liquid | Thickness of coating liquid | | Dry coating film (total) thickness | Flex resistance | OTR |
| | | | | | | | | First application | Second application | | | |
| | | Type | [mass%] | Type | [mass%] | | [mass%] | [μm] | [μm] | [μm] | [times] | [cc/m$^2$·day·atm] |
| Comparative Example | 15 | Tamarind seed gum (Glyate (registered trademark)) | 10 | Fructose | 90 | Bleached kraft paper 80 gsm | 25 | 9 | 22 | 8 | 0 | |
| | 16 | Tamarind seed gum (Glyate (registered trademark)) | 100 | - | - | Bleached kraft paper 80 gsm | 25 | 9 | 22 | 8 | 0 | |
| | 17 | Carrageenan | 10 | Fructose | 90 | Bleached kraft paper 80 gsm | 25 | 9 | 22 | 8 | 0 | - |

## Claims

1. A water-soluble film comprising a polysaccharide and a plasticizer, wherein a content of the plasticizer is 45 to 85 mass% based on a mass of the water-soluble film.

2. The water-soluble film according to claim 1, wherein the plasticizer is at least one selected from the group consisting of a polyhydric alcohol, a hydroxy acid, a monosaccharide, and a disaccharide.

3. The water-soluble film according to claim 1, wherein the plasticizer is at least one selected from the group consisting of glycerin, diglycerin, sorbitol, alkylene glycol, polyalkylene glycol, trimethylolpropane, erythritol, 2-methyl-1,3-propanediol, lactic acid, glucose, fructose, maltose, and trehalose.

4. The water-soluble film according to claim 1, wherein the plasticizer is at least one selected from the group consisting of glycerin, ethylene glycol, sorbitol, and fructose.

5. The water-soluble film according to claim 1, wherein the polysaccharide is at least one selected from the group consisting of carrageenan, alginic acid, guar gum, xanthan gum, pectin, hydroxyalkylcellulose, alkylcellulose, tamarind seed gum, agar, pullulan, locust bean gum, tara gum, and derivatives thereof.

6. The water-soluble film according to claim 1, wherein the polysaccharide is at least one selected from the group consisting of carrageenan, alginic acid, guar gum, xanthan gum, tamarind seed gum, locust bean gum, tara gum, and derivatives thereof.

7. The water-soluble film according to claim 1, wherein a content of the polysaccharide is 5 to 55 mass% based on a mass of the water-soluble film.

8. The water-soluble film according to claim 1, wherein the water-soluble film comprises two or more kinds of the polysaccharide.

9. The water-soluble film according to claim 1, wherein the water-soluble film has a toughness of 700 or more.

10. The water-soluble film according to claim 1, wherein the water-soluble film dissolves in water at 10°C within 1000 seconds.

11. The water-soluble film according to claim 1, wherein the water-soluble film is a coating film formed from a coating agent comprising a polysaccharide and a plasticizer.

12. A laminate comprising the water-soluble film according to claim 1 and a support, wherein the support is paper or a film.

13. A pouch comprising the water-soluble film according to claim 1.

14. The pouch according to claim 13, wherein the pouch contains therein at least one selected from the group consisting of a cleaning agent, a softener, and a perfume.

15. A coating agent comprising a polysaccharide and a plasticizer, wherein a content of the plasticizer is 45 to 85 mass% based on a mass of a solid component of the coating agent.

## INTERNATIONAL SEARCH REPORT

International application No. **PCT/JP2024/034011**

**A. CLASSIFICATION OF SUBJECT MATTER**

***C08J 5/18***(2006.01)i; ***B65D 65/40***(2006.01)i; ***C08L 5/00***(2006.01)i; ***C08L 5/04***(2006.01)i; ***C08L 101/06***(2006.01)i
FI: C08J5/18 CEP; B65D65/40 D; C08L5/00; C08L101/06; C08L5/04

According to International Patent Classification (IPC) or to both national classification and IPC

**B. FIELDS SEARCHED**

Minimum documentation searched (classification system followed by classification symbols)

C08J5/18; B65D65/40; C08L5/00; C08L5/04; C08L101/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/025728 A1 (UNILEVER IP HOLDINGS B.V.) 02 March 2023 (2023-03-02) claims 1, 15-16, page 24, line 5 to page 29, table 1 | 1-9, 11, 13-15 |
| X | JP 2016-503121 A (MONOSOL, LLC) 01 February 2016 (2016-02-01) claims 1, 29-30, paragraphs [0004], [0033]-[0038], example 1 | 1-11, 13, 15 |
| X | JP 2023-513996 A (THE UNITED STATES OF AMERICA, AS REPRESENTED BY THE SECRETARY OF AGRICULTURE) 05 April 2023 (2023-04-05) paragraphs [0005], [0049]-[0056], [0081]-[0083], tables 2a, 2b, 3, 10, examples 1, 4 | 1-9, 11-15 |
| X | JP 2006-8920 A (NISSHIN OILLIO GROUP LTD.) 12 January 2006 (2006-01-12) paragraphs [0016], [0037]-[0054], examples 2-6, 8-9 | 1-8, 12 |
| A | JP 2023-70505 A (SIGMA CORP.) 19 May 2023 (2023-05-19) | 12 |
| A | JP 2023-032052 A (TOPPAN PRINTING CO., LTD.) 09 March 2023 (2023-03-09) | 12 |
| A | JP 2022-138743 A (TOPPAN PRINTING CO., LTD.) 26 September 2022 (2022-09-26) | 12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 December 2024** | **24 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/034011**

**C. DOCUMENTS CONSIDERED TO BE RELEVANT**

| Category* | Citation of document, with indication, where appropriate, of the relevant passages | Relevant to claim No. |
|---|---|---|
| A | JP 2023-507329 A (THE PROCTER AND GAMBLE COMPANY) 22 February 2023 (2023-02-22) | 1-15 |
| A | JP 2009-539719 A (TATE & LYLE INGREDIENTS AMERICAS, INC.) 19 November 2009 (2009-11-19) | 1-15 |
| A | JP 2004-506435 A (W. RUITENBERG CZN. N.V) 04 March 2004 (2004-03-04) | 1-15 |

Form PCT/ISA/210 (second sheet) (July 2022)

**INTERNATIONAL SEARCH REPORT**
**Information on patent family members**

International application No.
**PCT/JP2024/034011**

| Patent document cited in search report | Publication date (day/month/year) | Patent family member(s) | Publication date (day/month/year) |
|---|---|---|---|
| WO 2023/025728 A1 | 02 March 2023 | (Family: none) | |
| JP 2016-503121 A | 01 February 2016 | US 2014/0199460 A1<br>claims 1, 29-30, paragraphs [0010], [0114]-[0116], example 1<br>JP 2020-12117 A<br>US 2021/0087365 A1<br>WO 2014/110356 A1<br>EP 2943075 A1<br>KR 10-2015-0130981 A<br>CN 105188403 A<br>KR 10-2021-0031782 A<br>CN 112940312 A | |
| JP 2023-513996 A | 05 April 2023 | US 2021/0155777 A1<br>paragraphs [0005], [0049]-[0056], [0081]-[0083], tables 2a, 2b, 3, 10, examples 1, 4<br>WO 2021/108756 A1<br>EP 4065640 A1<br>CN 114929794 A<br>KR 10-2022-0128616 A | |
| JP 2006-8920 A | 12 January 2006 | US 2008/0279798 A1<br>paragraphs [0019], [0040]-[0061], examples 2-6, 8-9<br>WO 2006/001132 A1<br>EP 1767575 A1<br>CN 1976989 A<br>KR 10-2007-0036064 A | |
| JP 2023-70505 A | 19 May 2023 | (Family: none) | |
| JP 2023-032052 A | 09 March 2023 | (Family: none) | |
| JP 2022-138743 A | 26 September 2022 | (Family: none) | |
| JP 2023-507329 A | 22 February 2023 | US 2021/0189303 A1<br>WO 2021/127073 A1<br>EP 3839030 A1<br>CN 114787330 A | |
| JP 2009-539719 A | 19 November 2009 | US 2008/0152761 A1<br>US 2007/0292481 A1<br>US 2010/0068350 A1<br>WO 2007/149276 A2<br>EP 2037752 A1<br>KR 10-2009-0034882 A<br>CN 101489404 A | |
| JP 2004-506435 A | 04 March 2004 | JP 2011-103896 A<br>US 2004/0037922 A1<br>WO 2002/015715 B<br>WO 2002/015715 A1<br>EP 1311165 A1<br>CN 1604743 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6058044 A